# EUROPÄISCHE PATENTSCHRIFT

(11) **EP 4 041 969 B1**
(45) Veröffentlichungstag und Bekanntmachung des Hinweises auf die Patenterteilung: **27.09.2023**
(21) Anmeldenummer: 20761138.5
(22) Anmeldetag: 13.08.2020
(51) Int. Cl.: E05B 17/22, E05B 65/02

(54) **SCHALTSCHRANK MIT EINER EINEN TÜRSTATUSSENSOR AUFWEISENDEN SCHALTSCHRANKTÜR**
SWITCHGEAR CABINET HAVING A SWITCHGEAR CABINET DOOR THAT COMPRISES A DOOR STATUS SENSOR
ARMOIRE DE COMMANDE POURVUE D'UNE PORTE D'ARMOIRE DE COMMANDE PRÉSENTANT UN CAPTEUR D'ÉTAT DE PORTE

(30) Priorität: 11.10.2019 DE 102019127448
(43) Veröffentlichungstag der Anmeldung: 17.08.2022
(73) Patentinhaber: Rittal GmbH & Co. KG, 35745 Herborn (DE)
(72) Erfinder: LAURÖSCH, Sven Michael, 35708 Haiger (DE); HAIN, Markus, 35684 Dillenburg (DE)
(74) Vertreter: Angerhausen, Christoph
(86) Internationale Anmeldenummer: PCT/DE2020/100706
(87) Internationale Veröffentlichungsnummer: WO 2021/069006

(56) Entgegenhaltungen:
- EP-A2- 1 900 890
- WO-A1-2011/141056
- DE-A1-102012 025 474

## Beschreibung

Die Erfindung geht aus von einem Schaltschrank mit einer den Schaltschrank verschließenden Schaltschranktür, die einen über einen Türgriff zu betätigenden Türverschluss aufweist, wobei die Schaltschranktür einen einen Magnetfeldsensor aufweisenden Türstatussensor aufweist, der dazu eingerichtet ist, über eine erfasste Erdmagnetfeldänderung einen geöffneten Zustand der Schaltschranktür von einem geschlossenen Zustand der Schaltschranktür zu unterscheiden, wobei zumindest der Magnetfeldsensor des Türstatussensors in einem zur Umgebung des Schaltschranks magnetisch durchlässigen Bereich des Türgriffs innerhalb des Türgriffs aufgenommen und über den magnetisch durchlässigen Bereich mit dem Erdmagnetfeld gekoppelt ist. Eine derartige Tür ist aus der WO 2011/141 056 A1 bekannt. Eine ähnliche Tür beschreibt auch die DE 10 2012 025474 A1. Die Überwachung des Öffnungsstatus einer Tür oder eines Fensters ist beispielsweise in der DE 10 2013 220 176 A1 und in der DE 10 2013 205 368 A1 beschrieben. Ähnliche Sensoranordnungen sind auch aus der US 2003/0071739 A1 bekannt.

Die Übertragung der aus dem Stand der Technik bekannten Türstatussensoren unter Verwendung von Magnetfeldsensoren auf Schaltschränke ist nicht ohne weiteres möglich. Dies liegt insbesondere an zwei schaltschrankspezifischen Faktoren, einmal dem Umstand, dass die zusätzliche Anbringung von Geräten an der Außenhaut des Schaltschranks, insbesondere an der Schaltschranktür, aus ästhetischen, sicherheitstechnischen oder funktionalen Gründen unerwünscht ist. Zum anderen sind Schaltschränke häufig vollständig aus Stahl gefertigt, so dass bei der Anbringung des Magnetfeldsensors am und insbesondere im Schaltschrankgehäuse eine zuverlässige Ermittlung einer gemessenen Magnetfeldänderung des überwachten Erdmagnetfeldes nicht möglich ist.

Es ist daher die Aufgabe der Erfindung, einen Schaltschrank der eingangs beschriebenen Art derart weiterzuentwickeln, dass er die Überwachung des Öffnungszustands einer Schaltschranktür mit Hilfe eines einen Magnetfeldsensor aufweisenden Türstatussensors erlaubt.

Diese Aufgabe wird durch einen Schaltschrank mit den Merkmalen des Anspruchs 1 gelöst. Die abhängigen Ansprüche betreffen jeweils vorteilhafte Ausführungsformen der Erfindung.

Demgemäß ist vorgesehen, dass zumindest der Magnetfeldsensor des Türstatussensors in einem zur Umgebung des Schaltschranks magnetisch durchlässigen Bereich des Türgriffs innerhalb des Türgriffs des Schaltschranks aufgenommen ist.

Durch die Unterbringung des Türstatussensors im Innern des Türgriffs wird erreicht, dass der Türstatussensor von außen nicht erkennbar am Schaltschrankgehäuse untergebracht ist, während er über den magnetisch durchlässigen Bereich des Türgriffs mit dem Erdmagnetfeld gekoppelt ist, um eine Magnetfeldänderung erfassen zu können, wenn die Schaltschranktür von einem ersten Öffnungszustand in einen zweiten Öffnungszustand, beispielsweise von einer geschlossenen Position in eine geöffnete Position verschwenkt wird.

Der Türgriff weist eine ferromagnetische Basis auf, über die der Türgriff auf eine Außenseite der Schaltschranktür aufgesetzt ist, beispielsweise auf der Außenseite der Schaltschranktür befestigt ist. Der Türgriff weist weiterhin eine Abdeckung auf, zwischen der und der Basis der Türstatussensor angeordnet ist. Dabei weist die Abdeckung den magnetisch durchlässigen Bereich auf und/oder sie besteht vollständig aus einem magnetisch durchlässigen Material.

Der Türgriff kann einen im Wesentlichen aus einem ferromagnetischen Material bestehenden Türgriffkorpus aufweisen, in dem der Türstatussensor mit dem Magnetfeldsensor aufgenommen ist. Der Türgriffkorpus kann eine über eine magnetisch durchlässige Abdeckung zur Umgebung des Türgriffs verschlossene Aufnahme aufweisen, in der zumindest der Magnetfeldsensor des Türstatussensors oder der gesamte Türstatussensor aufgenommen ist.

Der Türgriff kann einen gegenüber der Schaltschranktür verschwenkbaren ferromagnetischen Schwenkhebel aufweisen, der in einer von der Schaltschranktür abgeschwenkten Offenstellung eine Aufnahme des Türgriffs, in der zumindest der Magnetfeldsensor des Türstatussensors aufgenommen ist, freiliegt und die Aufnahme verdeckt, wenn sich der Schwenkhebel in einer an die Schaltschranktür angeklappten Schließstellung befindet.

Der Türgriff kann ein Funkgriff für die berührungslose Ver- und/oder Entriegelung des Türgriffs sein. Dazu kann der Türgriff ein auf einer im Innern des Türgriffs angeordneten Leiterplatine angeordnetes Funkmodul aufweisen. Der Türstatussensor kann auf derselben Leiterplatine wie das Funkmodul angeordnet sein.

Der Türstatussensor kann weiterhin einen ein- oder mehrachsigen, beispielsweise einen dreiachsigen Beschleunigungssensor aufweisen, der dazu eingerichtet ist, bei einer erfassten Beschleunigung den Magnetfeldsensor aus einem Stand-by-Modus, in dem der Magnetfeldsensor inaktiv ist, in einen Run-Modus, in dem der Magnetfeldsensor aktiviert ist, zur Erfassung einer Magnetfeldänderung zu überführen.

Der Magnetfeldsensor kann einen Reedschalter aufweisen oder als ein solcher ausgebildet sein. Der Schaltschrank kann an einer von der Schaltschranktür verschließbaren Schranköffnung einen Permanentmagneten oder ein magnetisierbares Sensorgegenstück aufweisen. Der Magnetfeldsensor kann in einer geöffneten Stellung der Schaltschranktür von dem Permanentmagneten oder dem magnetisierbaren Sensorgegenstück entfernt und in einer geschlossenen Stellung der Schaltschranktür dem Permanentmagneten oder dem magnetisierbaren Sensorgegenstück angenähert sein.

Der Magnetfeldsensor kann einen Hall-Sensor und der Schaltschrank an einer von der Schaltschranktür verschließbaren Schranköffnung ein magnetisches oder ein magnetisierbares Sensorgegenstück, beispielsweise ein Schaltschrankrahmengestell aufweisen.

Der Schaltschrank kann an einer von der Schaltschranktür verschließbaren Schranköffnung einen Lichtreflektor aufweisen und der Türstatussensor ein lichtempfindlicher und bei Lichteinfall Licht in elektrische Energie umwandelnder Sensor sein, beispielsweise ein Photoelement. Alternativ kann eine IR-Lichtschranke verwendet werden.

Soweit in der vorangegangenen Beschreibung eine Schaltschranktür beschrieben ist, so muss es sich dabei nicht zwangsläufig um eine einseitig am Rahmengestell des Schaltschranks anscharnierte Tür im klassischen Sinne handeln, auch wenn dies die bevorzugte Ausführungsform der Erfindung darstellt. Vielmehr kann die Erfindung auch auf Ausführungsformen übertragen werden, bei der beispielsweise ein anderes Flachteil des Schaltschranks mit einem Türstatussensor und einem entsprechenden Magnetfeldsensor ausgestattet ist, um beispielsweise zu ermitteln, ob ein beliebiges Flachteil, beispielsweise eine montierte Seitenwand des Schaltschranks, bewegt wurde, wozu beispielsweise die Seitenwand von dem Schaltschrankrahmengestell demontiert werden müsste, so dass beispielsweise in dem Falle einer erfassten entfernten Seitenwand eine Stromlosschaltung einer in dem Schaltschrank aufgenommenen Schaltanlage initiiert werden kann.

Weitere Einzelheiten der Erfindung werden anhand der nachstehenden Figuren erläutert. Dabei zeigt:
- Figur 1: eine beispielhafte Ausführungsform eines Türgriffs;
- Figur 2: eine weitere beispielhafte Ausführungsform eines Türgriffs;
- Figur 3: in schematischer Darstellung einen Schaltschrank gemäß einer Ausführungsform der Erfindung; und
- Figur 4: ein Detail eines Horizontalquerschnitts im Bereich des Türgriffs des Schaltschranks gemäß Figur 3.

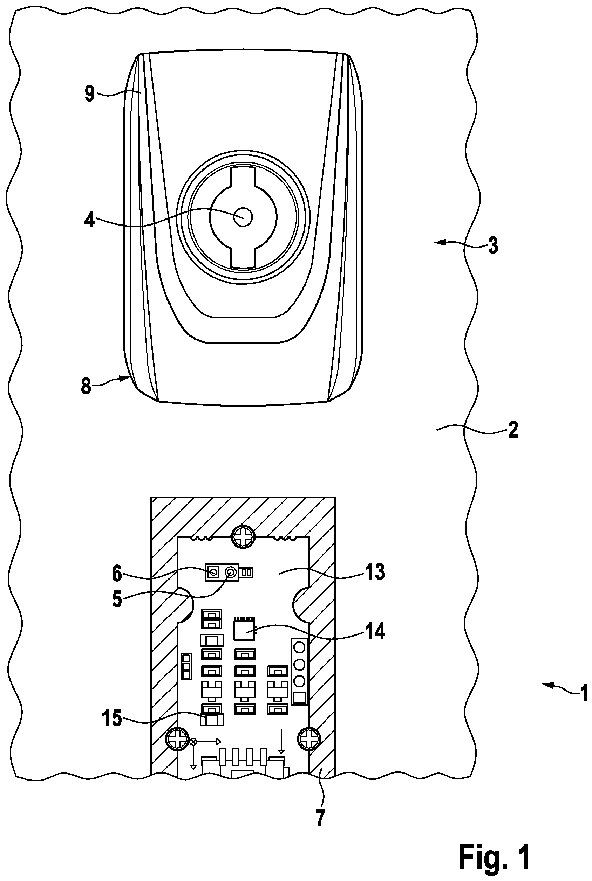

Der in Figur 1 gezeigte Türgriff 3 ist als ein sogenanntes Türschlossschild ausgebildet und weist eine Abdeckung 8 auf, die auf einer Basis 7 montiert werden kann. Auf der Basis 7 ist eine Platine 13 angeordnet, welche bei auf der Basis 7 montierter Abdeckung 8 vollständig von der Abdeckung 8 verdeckt ist. Auf der Platine 13 sind die wesentlichen elektrischen Funktionen des Türgriffs 3 realisiert, insbesondere auch der Türstatussensor 6, vorliegend zusätzlich zu einem Funkmodul 14 und einem ein- oder mehrachsigen Beschleunigungssensor 15. Sämtliche der genannten funktionalen Baugruppen sind auf derselben Platine 13 realisiert und können somit platzsparend im Innern des Griffs 3 untergebracht werden.

Der Türgriff 3 ist aus einem Kunststoffmaterial ausgebildet, welches magnetisch durchlässig ist, mithin eine magnetische Permeabilität aufweist, die im Bereich von 1 liegt. Auf diese Weise ist es möglich, dass der Türstatussensor 6 einerseits platzsparend im Innern des Türgriffs 3 verbaut ist, andererseits aufgrund der den durchlässigen Bereich 9 aufweisenden oder diesen bildenden Abdeckung 8 eine Veränderung des Erdmagnetfeldes messen kann, wenn die Tür aus einer ersten Lage in eine zweite Lage um eine vertikale Achse verschwenkt wird, wobei der Türstatussensor 6 mit seinem Magnetfeldsensor 5 eine Kreisbahn durchläuft. Grundsätzlich sind keine absoluten Messungen des Erdmagnetfelds, etwas einer Feldstärke, erforderlich, um eine Türstatusauswertung in erfindungsgemäßer Weise durchzuführen. Beispielsweise kann bei einer Erstinstallation des Türgriffes 3 vorgesehen sein, dass der Türstatussensor 6 auf eine geschlossene Position der Schaltschranktür 2 kalibriert wird, so dass jede Abweichung des gemessenen Erdmagnetfeldes, die eine gewisse Mindestabweichung übersteigt, als eine Türstatusveränderung ausgewertet werden kann, mithin eine zumindest teilweise Offenstellung der Schaltschranktür 2.

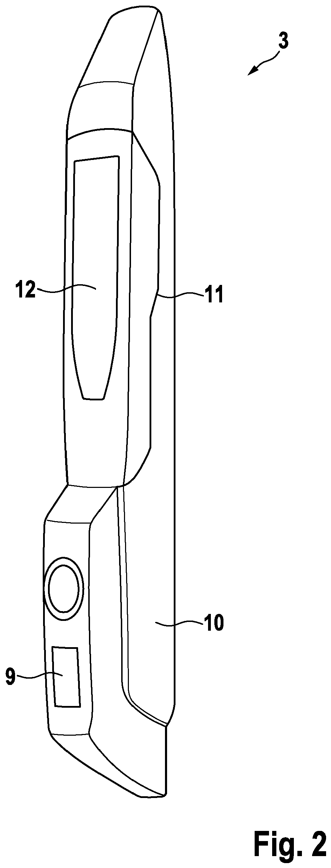

Die Figur 2 zeigt eine weitere Ausführungsform eines Türgriffs 3. Dieser weist einen Schwenkhebel 12 auf, der in einer Ebene verschwenkt werden kann, die sich senkrecht zu der Schaltschranktürebene erstreckt. Der Türgriff 3 kann einen Korpus 10 aufweisen, der beispielsweise in seinen wesentlichen Bestandteilen, wie dies bei gattungsgemäßen Türgriffen üblich ist, aus einem ferromagnetischen Material, beispielsweise Stahl oder Eisen bestehen kann. Auch bei dieser Ausführungsform ist der Türstatussensor 6 (nicht erkennbar) im Innern des Türgriffs 3, insbesondere im unteren Teil des Korpus 10 aufgenommen. Um eine magnetische Abschirmung des Sensors 6 in Innern des Korpus 10 zu vermeiden, weist der Korpus 10 an seinem unteren Ende den magnetisch durchlässigen Bereich 9 auf. Dieser kann beispielsweise als eine Abdeckung 8 aus einem Kunststoff, beispielsweise Polycarbonat, ausgebildet sein und im Übrigen dieselbe Einfärbung wie der Korpus 10 aufweisen, so dass die Bereitstellung des durchlässigen Bereichs 9 im unteren Teil des Korpus 10 zu keinen ästhetischen und funktionalen Einbußen führt.

Alternativ kann bei der Ausführungsform gemäß Figur 2 vorgesehen sein, dass der Türstatussensor 6 in einer Aufnahme 11 des Türgriffs 3 aufgenommen ist, welche freiliegt, wenn der Schwenkhebel 12 in einer von der Schaltschranktür 2 abgeschwenkten Offenstellung angeordnet ist, während die Aufnahme 11 von dem beispielsweise ebenfalls ferromagnetischen Schwenkhebel 12 verdeckt ist, wenn sich der Schwenkhebel 12 in einer an die Schaltschranktür 2 angeklappten Schließstellung befindet, wie dies in Figur 2 gezeigt ist.

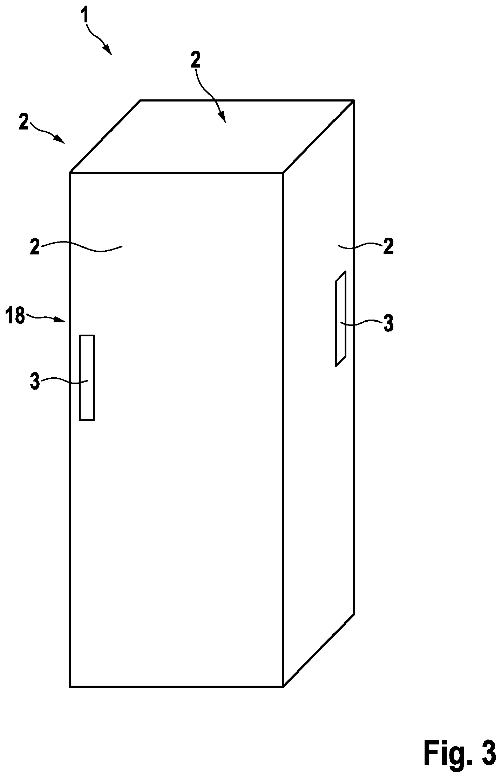

Die Figur 3 zeigt in schematischer Darstellung einen Schaltschrank 1, der ein Schaltschrankrahmengestell 18 aufweist, an dem eine Mehrzahl Flachteile angeordnet sind, die zum Teil als Schaltschranktüren 2 ausgebildet sind und demgemäß einen Türgriff 3 aufweisen. Darüber hinaus weist der Schaltschrank 1 zusätzliche Flachteile auf, die nicht als Türen ausgebildet sind, beispielsweise Seitenwände oder ein Dachblech.

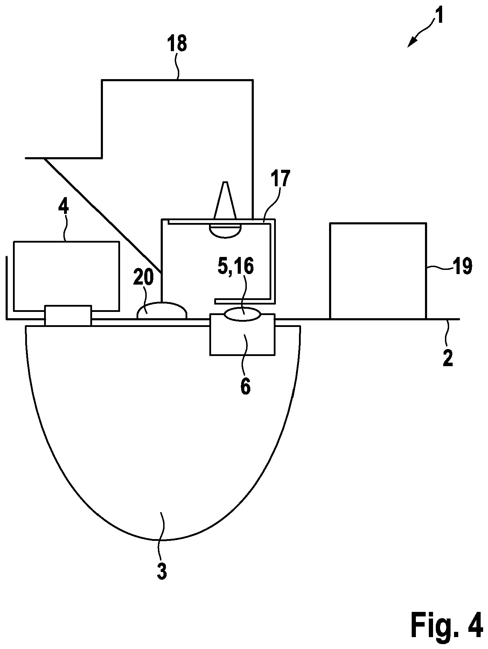

Eine Detailansicht eines Horizontalquerschnitts im Bereich eines der beiden Türgriffe 3 ist in Figur 4 gezeigt. Demgemäß ist der Türgriff 3 auf einer Außenseite der Schaltschranktür 2 montiert, wobei der Türstatussensor 6 zumindest mit seinem Magnetfeldsensor 5 bzw. einem Reedschalter 16 sich durch die Tür 2 hindurch erstreckt, um eine relative Annäherung des Türstatussensors 6 an das Sensorgegenstück 17 an der Innenseite des Schaltschranks 1 zu bestimmen. Insbesondere ist das Sensorgegenstück 17 an einer Profilseite des Schaltschrankrahmengestells 18 montiert, die der von dem Türelement 2 verschlossenen Schaltschranköffnung zugewandt und in Bezug auf diese nach hinter versetzt angeordnet ist. Des Weiteren ist an der Türinnenseite ein Türrohrrahmen 19 angeordnet.

Über den Türgriff 3 ist eine sich ebenfalls an der Türinnenseite erstreckende Mechanik des Türverschlusses 4 angeordnet, beispielsweise ein in Vertikalrichtung verstellbarer Schubstangenverschluss. Über ein Dichtelement 20 ist die Tür 2 an der Innenseite gegenüber dem Rahmengestell 18 in seiner Schließstellung abgedichtet. Insbesondere dann, wenn der Magnetfeldsensor 5 des Türstatussensors 6 als ein Reedkontakt ausgebildet ist oder einen solchen aufweist, kann die Verwendung eines Sensorgegenstücks 17 zweckmäßig sein.

Die Erfindung ist jedoch nicht auf Ausführungsformen beschränkt, bei denen der Türöffnungsstatus durch die Detektierung eines Sensorgegenstücks 17 ermittelt wird. Insbesondere soll die Erfindung auch solche Ausführungsformen umfassen, bei denen mit dem Türstatussensor, insbesondere mit dem Magnetfeldsensor 5 des Türstatussensors 6, das Erdmagnetfeld als Referenz für die Bestimmung des Türstatus herangezogen wird und die Ermittlung des Türstatussensors im Wesentlichen auf der Erfassung einer Änderung des gemessenen Erdmagnetfeldes beruht. Es ist verständlich, dass die zuletzt genannten Ausführungsformen, welche auf das Erdmagnetfeld Bezug nehmen, nur bei statisch verbauten Schaltschränken zweckmäßig sind und daher insbesondere nicht bei Anwendungen in Verkehrsmitteln wie Zügen oder Schiffen verwendet werden können.

### Bezugszeichenliste

- 1: Schaltschrank
- 2: Schaltschranktür
- 3: Türgriff
- 4: Türverschluss
- 5: Magnetfeldsensor
- 6: Türstatussensor
- 7: Basis
- 8: Abdeckung
- 9: magnetisch durchlässiger Bereich
- 10: Türgriffkorpus
- 11: Aufnahme
- 12: Schwenkhebel
- 13: Leiterplatine
- 14: Funkmodul
- 15: Beschleunigungssensor
- 16: Reedschalter
- 17: Sensorgegenstück
- 18: Schaltschrankrahmengestell
- 19: Türrohrrahmen
- 20: Dichtelement

## Patentansprüche

1. Schaltschrank (1) mit einer den Schaltschrank (1) verschließenden Schaltschranktür (2), die einen über einen Türgriff (3) zu betätigenden Türverschluss (4) aufweist, wobei die Schaltschranktür (2) einen einen Magnetfeldsensor (5) aufweisenden Türstatussensor (6) aufweist, der dazu eingerichtet ist, über eine erfasste Erdmagnetfeldänderung einen geöffneten Zustand der Schaltschranktür (2) von einem geschlossenen Zustand der Schaltschranktür (2) zu unterscheiden, wobei zumindest der Magnetfeldsensor (5) des Türstatussensors (6) in einem zur Umgebung des Schaltschranks (1) magnetisch durchlässigen Bereich (9) des Türgriffs (3) innerhalb des Türgriffs (3) aufgenommen und über den magnetisch durchlässigen Bereich (9) mit dem Erdmagnetfeld gekoppelt ist, wobei der Türgriff (3) eine ferromagnetische Basis (7), über die der Türgriff (3) auf eine Außenseite der Schaltschranktür (2) aufgesetzt ist, und eine Abdeckung (8) aufweist, zwischen der und der Basis (7) der Türstatussensor (6) angeordnet ist, wobei die Abdeckung (8) den magnetisch durchlässigen Bereich (9) aufweist und/oder vollständig aus einem magnetisch durchlässigen Material besteht.

2. Schaltschrank (1) nach Anspruch 1, bei dem der Türgriff (3) einen aus einem ferromagnetischen Material bestehenden Türgriffkorpus (10) aufweist, in dem der Türstatussensor (6) mit dem Magnetfeldsensor (5) aufgenommen ist, wobei der Türgriffkorpus (10) eine über eine magnetisch durchlässige Abdeckung (8) zur Umgebung des Türgriffs (3) verschlossene Aufnahme (11) aufweist, in der zumindest der Magnetfeldsensor (5) des Türstatussensors (6) aufgenommen ist.

3. Schaltschrank (1) nach Anspruch 2, bei dem der Türgriff (3) einen gegenüber der Schaltschranktür (2) verschwenkbaren ferromagnetischen Schwenkhebel (12) aufweist, der in einer von der Schaltschranktür (2) abgeschwenkten Offenstellung eine Aufnahme (11) des Türgriffs (3), in der zumindest der Magnetfeldsensor (5) des Türstatussensors (6) aufgenommen ist, freilegt und die Aufnahme (11) verdeckt, wenn sich der Schwenkhebel (12) in einer an die Schaltschranktür (2) angeklappten Schließstellung befindet.

4. Schaltschrank (1) nach einem der vorangegangen Ansprüche, bei dem der Türgriff (3) ein Funkgriff für die berührungslose Ver- und/oder Entriegelung des Türgriffs (3) ist, wozu der Türgriff (3) ein auf einer im Innern des Türgriffs (3) angeordneten Leiterplatine (13) angeordnetes Funkmodul (14) aufweist, wobei der Türstatussensor (6) auf derselben Leiterplatine (13) wie das Funkmodul (14) angeordnet ist.

5. Schaltschrank (1) nach einem der vorangegangen Ansprüche, bei dem der Türstatussensor (6) weiterhin einen ein-oder mehrachsigen Beschleunigungssensor (15) aufweist, der dazu eingerichtet ist, bei einer erfassten Beschleunigung den Magnetfeldsensor (5) aus einem deaktivierten Stand-by-Modus in einen aktivierten Modus zur Erfassung einer Magnetfeldänderung zu überführen.

6. Schaltschrank (1) nach einem der vorangegangen Ansprüche, bei dem der Magnetfeldsensor (5) einen Reedschalter (16) aufweist.

7. Schaltschrank (1) nach einem der vorangegangen Ansprüche, bei dem der Schaltschrank (1) an einer von der Schaltschranktür (2) verschließbaren Schranköffnung einen Permanentmagneten oder ein magnetisierbares Sensorgegenstück (17) aufweist, wobei der Magnetfeldsensor (5) in einer geöffneten Stellung der Schaltschranktür (2) von dem Permanentmagneten oder dem magnetisierbaren Sensorgegenstück (17) entfernt und in einer geschlossenen Stellung der Schaltschranktür (2) dem Permanentmagneten oder dem magnetisierbaren Sensorgegenstück (17) angenähert ist.

8. Schaltschrank (1) nach einem der vorangegangen Ansprüche, bei dem der Magnetfeldsensor (5) einen Hall-Sensor und der Schaltschrank (1) an einer von der Schaltschranktür (2) verschließbaren Schranköffnung ein magnetisches oder ein magnetisierbares Sensorgegenstück (17), beispielsweise ein Schaltschrankrahmengestell (18) aufweist.

9. Schaltschrank (1) nach einem der vorangegangen Ansprüche, bei dem der Schaltschrank (1) an einer von der Schaltschranktür (2) verschließbaren Schranköffnung einen Lichtreflektor aufweist und der Türstatussensor (6) ein lichtempfindlicher und bei Lichteinfall Licht in elektrische Energie umwandelnder Sensor ist, beispielsweise ein Photoelement.

## Claims

1. A switch cabinet (1) having a switch cabinet door (2) which closes the switch cabinet (1) and has a door lock (4) which can be actuated via a door handle (3), the switch cabinet door (2) having a door status sensor (6) which has a magnetic field sensor (5) being adapted to distinguish an open state of the switch cabinet door (2) from a closed state of the switch cabinet door (2) by means of a detected geomagnetic field change, wherein at least the magnetic field sensor (5) of the door status sensor (6) is accommodated in a region (9) of the door handle (3) within the door handle (3) which is magnetically permeable to the environment of the switch cabinet (1) and is coupled to the geomagnetic field via the magnetically permeable region (9), wherein the door handle (3) has a ferromagnetic base (7), via which the door handle (3) is placed on an outer side of the switch cabinet door (2), and a cover (8), between which and the base (7) the door status sensor (6) is arranged, the cover (8) having the magnetically permeable region (9) and/or consisting entirely of a magnetically permeable material.

2. The switch cabinet (1) according to claim 1, in which the door handle (3) has a door handle body (10) which consists of a ferromagnetic material and in which the door status sensor (6) with the magnetic field sensor (5) is accommodated, the door handle body (10) having a receptacle (11) which is closed off from the surroundings of the door handle (3) via a magnetically permeable cover (8) and in which at least the magnetic field sensor (5) of the door status sensor (6) is accommodated.

3. The switch cabinet (1) according to claim 2, in which the door handle (3) has a ferromagnetic pivoting lever (12) which can be pivoted with respect to the switch cabinet door (2) and which, in an open position pivoted away from the switch cabinet door (2), exposes a receptacle (11) of the door handle (3), in which at least the magnetic field sensor (5) of the door status sensor (6) is accommodated, and covers the receptacle (11) when the pivoting lever (12) is in a closed position pivoted against the switch cabinet door (2).

4. The switch cabinet (1) according to one of the preceding claims, in which the door handle (3) is a radio handle for the contactless locking and/or unlocking of the door handle (3), for which purpose the door handle (3) has a radio module (14) arranged on a printed circuit board (13) arranged inside the door handle (3), the door status sensor (6) being arranged on the same printed circuit board (13) as the radio module (14).

5. The switch cabinet (1) according to any one of the preceding claims, wherein the door status sensor (6) further comprises a single- or multi-axis acceleration sensor (15) arranged to transfer the magnetic field sensor (5) from a deactivated stand-by mode to an activated mode for detecting a magnetic field change when an acceleration is detected.

6. The switch cabinet (1) according to any one of the preceding claims, wherein the magnetic field sensor (5) comprises a reed switch (16).

7. The switch cabinet (1) according to one of the preceding claims, in which the switch cabinet (1) has a permanent magnet or a magnetizable sensor counterpart (17) at a cabinet opening which can be closed by the switch cabinet door (2), wherein the magnetic field sensor (5) is remote from the permanent magnet or the magnetizable sensor counterpart (17) in an open position of the switch cabinet door (2) and is proximate to the permanent magnet or the magnetizable sensor counterpart (17) in a closed position of the switch cabinet door (2).

8. The switch cabinet (1) according to one of the preceding claims, in which the magnetic field sensor (5) comprises a Hall sensor and the switch cabinet (1) comprises a magnetic or a magnetizable sensor counterpart (17), for example a switch cabinet frame (18), at a cabinet opening which can be closed by the switch cabinet door (2).

9. The switch cabinet (1) according to one of the preceding claims, in which the switch cabinet (1) has a light reflector at a cabinet opening which can be closed by the switch cabinet door (2), and the door status sensor (6) is a light-sensitive sensor, for example a photoelement, which converts light into electrical energy when light falls on it.

## Revendications

1. Armoire de commande (1) avec une porte d'armoire de commande (2) fermant l'armoire de commande (1), qui comprend une fermeture de porte (4) pouvant être actionnée par l'intermédiaire d'une poignée de porte (3), dans laquelle la porte d'armoire de commande (2) comprend un capteur d'état de la porte (6) comprenant un capteur de champ magnétique (5), qui est conçu pour distinguer, grâce à une modification détectée du champ magnétique terrestre, un état ouvert de la porte d'armoire de commande (2) d'un état fermé de la porte d'armoire de commande (2), dans laquelle au moins le capteur de champ magnétique (5) du capteur d'état de la porte (6) est logé dans une partie (9) de la poignée de porte (3), à l'intérieur de la poignée de porte (3), magnétiquement perméable à l'environnement de l'armoire de commande (1) et est couplé au champ magnétique terrestre par l'intermédiaire de la partie magnétiquement perméable (9), dans laquelle la poignée de porte (3) comprend une base ferromagnétique (7) par l'intermédiaire de laquelle la poignée de porte (3) est posée sur une face externe de la porte d'armoire de commande (2) et comprend un couvercle (8) entre lequel et la base (7) est disposé le capteur d'état de la porte (6), dans laquelle le couvercle (8) comprend la partie magnétiquement perméable (9) et/ou est constitué entièrement d'un matériau magnétiquement perméable.

2. Armoire de commande (1) selon la revendication 1, dans laquelle la poignée de porte (3) comprend un corps de poignée de porte (10) constitué d'un matériau ferromagnétique, dans lequel est logé le capteur d'état de la porte (6) avec le capteur de champ magnétique (5), dans laquelle le corps de poignée de porte (10) comprend un logement (11) fermé par rapport à l'environnement de la poignée de porte (3) par l'intermédiaire d'un couvercle magnétiquement perméable (8), dans lequel est logé au moins le capteur de champ magnétique (5) du capteur d'état de la porte (6).

3. Armoire de commande (1) selon la revendication 2, dans laquelle la poignée de porte (3) comprend un levier pivotant ferromagnétique (12) pouvant être pivoté par rapport à la porte d'armoire de commande (2), qui, dans une position ouverte pivotée hors de la porte d'armoire de commande (2), libère un logement (11) de la poignée de porte (3), dans lequel est logé le capteur de champ magnétique (5) du capteur d'état de la porte (6) et recouvre le logement (11) lorsque le levier pivotant (12) se trouve dans une position de fermeture rabattue sur la porte d'armoire de commande (2).

4. Armoire de commande (1) selon l'une des revendications précédentes, dans laquelle la poignée de porte (3) est une poignée radio pour le verrouillage et/ou le déverrouillage sans contact de la poignée de porte (3), la poignée de porte (3) comprenant pour cela un module radio (14) disposé sur une carte de circuit imprimé (13) disposée à l'intérieur de la poignée de porte (3), dans laquelle le capteur d'état de la porte (6) est disposé sur la même carte de circuit imprimé (13) que le module radio (14).

5. Armoire de commande (1) selon l'une des revendications précédentes, dans laquelle le capteur d'état de la porte (6) comprend en outre un capteur d'accélération (15) mono ou multiaxial, qui est conçu pour faire passer le capteur de champ magnétique (5) d'un mode de stand-by désactivé vers un mode de détection d'une modification du champ magnétique, lors de la détection d'une accélération.

6. Armoire de commande (1) selon l'une des revendications précédentes, dans laquelle le capteur de champ magnétique (5) comprend un interrupteur reed (16).

7. Armoire de commande (1) selon l'une des revendications précédentes, dans laquelle l'armoire de commande (1) comprend, au niveau d'une ouverture d'armoire pouvant être fermée par la porte d'armoire de commande (2), un aimant permanent ou une contre-pièce de capteur magnétisable (17), dans laquelle le capteur de champ magnétique (5), dans une position ouverte de la porte d'armoire de commande (2), est éloigné de l'aimant permanent ou de la contre-pièce de capteur magnétisable (17) et, dans une position fermée de la porte d'armoire de commande (2), est rapproché de l'aimant permanent ou de la contre-pièce de capteur magnétisable (17).

8. Armoire de commande (1) selon l'une des revendications précédentes, dans laquelle le capteur de champ magnétique (5) comprend un capteur à effet Hall et l'armoire de commande (1) comprend, au niveau d'une ouverture d'armoire pouvant être fermée par la porte d'armoire de commande (2), une contre-pièce de capteur magnétique ou magnétisable (17), par exemple un châssis d'armoire de commande (18).

9. Armoire de commande (1) selon l'une des revendications précédentes, dans laquelle l'armoire de commande (1) comprend, au niveau d'une ouverture d'armoire pouvant être fermée par la porte d'armoire de commande (2), un réflecteur de lumière et le capteur d'état de la porte (6) est un capteur photosensible et convertissant la lumière en énergie électrique, par exemple un élément photovoltaïque.
